# EUROPÄISCHE PATENTSCHRIFT

(11) **EP 1 106 399 B1**
(45) Veröffentlichungstag und Bekanntmachung des Hinweises auf die Patenterteilung: **16.06.2004**
(21) Anmeldenummer: 01103559.9
(22) Anmeldetag: 25.03.1997
(51) Int. Cl.: B60D 1/06, B60D 1/54, B60D 1/64

(54) **Anhängekupplung**
Trailer coupling
Attelage de remorque

(30) Priorität: 01.04.1996 DE 19612962
(43) Veröffentlichungstag der Anmeldung: 13.06.2001
(62) Teilanmeldung aus: 97908293.0
(73) Patentinhaber: ORIS FAHRZEUGTEILE HANS RIEHLE GmbH, 71696 Möglingen (DE)
(72) Erfinder: Gentner, Wolfgang, 71254 Ditzingen (DE); Kleb, Emmerich, 71606 Markgröningen (DE); Riehle, Jörg, 70439 Stuttgart (DE); Riehle, Hans, 71638 Ludwigsburg (DE)
(74) Vertreter: HOEGER, STELLRECHT & PARTNER Patentanwälte

(56) Entgegenhaltungen:
- DE-A- 3 833 471
- DE-A- 4 142 317
- FR-A- 2 450 167
- FR-A- 2 659 278

## Beschreibung

Die Erfindung betrifft eine Anhängekupplung für Kraftfahrzeuge, insbesondere Personenkraftfahrzeuge, mit einer Kupplungskugel, mit einem Kugelhals, dessen einer Endbereich abgekröpft ist und die Kupplungskugel trägt, und mit einer Kontakteinheit zur Herstellung einer Verbindung zwischen einer Fahrzeugelektrik und einer Anhängerelektrik.

Derartige Anhängekupplungen sind aus dem Stand der Technik bekannt. Der Nachteil derartiger Anhängekupplungen ist darin zu sehen, daß die Kontakteinheit in der Regel schwer zugänglich ist, insbesondere bei den abnehmbaren Anhängekupplungen.

Der Erfindung liegt daher die Aufgabe zugrunde, eine Anhängekupplung mit einer Kontakteinheit zu schaffen, welche besser zugänglich ist.

Diese Aufgabe wird durch eine Einheit gemäß Anspruch 1 gelöst.

Der Vorteil der erfindungsgemäßen Lösung ist darin zu sehen, daß durch die Anordnung der Kontakteinheit an einem Schwenkarm die Möglichkeit geschaffen ist, einerseits die Kontakteinheit in eine Arbeitsstellung zu schwenken, in welcher sie leicht zugänglich ist, und andererseits die Kontakteinheit dann, wenn kein Kontakt zwischen der Fahrzeugelektrik und der Anhängerelektrik hergestellt werden soll, die Kontakteinheit in die Ruhestellung zu verschwenken.

Besonders vorteilhaft ist es dabei, wenn die Kontakteinheit in der Ruhestellung in einer eine Bodenfreiheit des Kraftfahrzeugs nicht beeinträchtigenden Stellung steht.

Dadurch ist sichergestellt, daß die Kontakteinheit in der Ruhestellung keine Störung des Einsatzes des Fahrzeugs durch negative Beeinträchtigung der Bodenfreiheit desselben bedingt.

Vorteilhaft ist die erfindungsgemäße Lösung dann ausgebildet, wenn die Kontakteinheit in der Arbeitsstellung im wesentlichen auf einer der Fahrzeugkarosserie abgewandten Seite des hinteren Stoßfängers steht und somit in einem für einen Nutzer optimal zugänglichen Bereich angeordnet steht.

Besonders günstig zugänglich ist die Kontakteinheit dann, wenn diese in der Arbeitsstellung höher angeordnet ist als eine Unterkante des Stoßfängers, so daß - im Gegensatz zu den bislang bekannten Lösungen - die Herstellung eines Kontakts zwischen der Fahrzeugelektrik und der Anhängerelektrik es nicht erforderlich macht, unterhalb des Stoßfängers die fahrzeugseitige Kontakteinheit mit einer anhängerseitigen Kontakteinheit in Verbindung zu bringen.

Ferner hat es sich bei einem Ausführungsbeispiel als vorteilhaft erwiesen, wenn die Kontakteinheit in der Arbeitsstellung niedriger angeordnet ist als die Kupplungskugel, da damit sichergestellt ist, daß ein die Kupplungskugel übergreifendes Anhängeelement beim Fahren nicht mit der Kontakteinheit kollidieren kann.

Eine besonders vorteilhafte Lösung sieht vor, daß die Kontakteinheit in der Ruhestellung auf einer der Fahrzeugkarosserie zugewandten Seite des hinteren Stoßfängers angeordnet ist. In dieser Stellung besteht die Möglichkeit, die Kontakteinheit aus dem Sichtbereich eines Nutzers des Fahrzeugs zu entfernen und vorzugsweise ohne negative Beeinflussung der Bodenfreiheit des Fahrzeugs anzuordnen.

Besonders zweckmäßig ist es hierbei, wenn die Kontakteinheit in der Ruhestellung in einem Ruhestellungsraum angeordnet ist, welcher zwischen dem hinteren Stoßfänger und der Fahrzeugkarosserie liegt. In diesem Fall ist eine besonders einfache und weitgehend unsichtbare Anordnung der Kontakteinheit möglich.

Besonders zweckmäßig ist es dabei, wenn der Ruhestellungsraum im wesentlichen oberhalb einer durch eine Bodengruppe und den hinteren Stoßfänger des Kraftfahrzeugs definierten bodenseitigen Fläche liegt. Damit ist einerseits eine ausreichende Bodenfreiheit sichergestellt und andererseits sichergestellt, daß die Kontakteinheit nicht im Sichtbereich des Benutzers des Fahrzeugs angeordnet ist.

Hinsichtlich des Schwenklagers wurden im Zusammenhang mit den bislang beschriebenen Ausführungsbeispielen keine näheren Angaben gemacht. So sieht ein vorteilhaftes Ausführungsbeispiel vor, daß das Schwenklager an einem den Kugelhals tragenden Basisteil gehalten ist, so daß das Schwenklager für den Schwenkarm für die Kontakteinheit und der Kugelhals am selben Basisteil sitzen und somit in besonders einfacher Weise gemeinsam montierbar sind.

Hinsichtlich der Schwenkachse wurden im Zusammenhang mit der bisherigen Beschreibung der einzelnen Ausführungsbeispiele ebenfalls keine näheren Angaben gemacht. Prinzipiell wäre jede geeignete Lage der Schwenkachse denkbar, beispielsweise eine ungefähr parallel zur Fahrzeugquerrichtung verlaufende Schwenkachse.

Ein vorteilhaftes Ausführungsbeispiel sieht vor, daß die Schwenkachse schräg zu einer zur Fahrzeuglängsrichtung parallelen vertikalen Längsebene verläuft. Bei einer derartigen Schrägstellung besteht die Möglichkeit, durch ein Verschwenken der Kontakteinheit um eine einzige Achse diese zwischen der Ruhestellung und der Arbeitsstellung hin- und herzubewegen.

Eine besonders vorteilhafte Realisierung der erfindungsgemäßen Lösung sieht vor, daß die Projektion der Schwenkachse auf eine zur Fahrzeuglängsrichtung parallele vertikale Längsebene um einen Winkel gegenüber der Horizontalen geneigt ist, welcher in einem Winkelbereich von ungefähr 0° bis ungefähr 60° liegt.

Noch besser lassen sich Kugelhals und Kupplungskugel in der Ruhestellung dann positionieren, wenn der Winkelbereich bis maximal 50° reicht.

Die Bodenfreiheit während des Verschwenkens läßt sich dadurch verbessern, daß der Winkelbereich bei mindestens 15° beginnt, noch besser bei mindestens 30°.

Darüber hinaus ist es bei einer erfindungsgemäßen Lösung zweckmäßig, wenn die Projektion der Schwenkachse auf eine horizontale Ebene um einen Winkel schräg zur Fahrzeuglängsrichtung verläuft, welcher in einem Winkelbereich von ungefähr 20° bis ungefähr 70° liegt.

Besonders vorteilhaft ist es, wenn der Winkelbereich zwischen ungefähr 30° und ungefähr 65°, noch besser zwischen ungefähr 40° und ungefähr 60°, liegt.

Vorteilhafterweise ist vorgesehen, daß die Projektion der Schwenkachse auf eine vertikale, senkrecht zur Fahrzeuglängsrichtung verlaufende Querebene um einen Winkel gegenüber der Horizontalen geneigt ist, welcher in einem Winkelbereich von ungefähr 0° bis ungefähr 60° liegt.

Diese vorteilhaften Ausführungsformen einer Realisierung einer Schwenkbewegung für die Kontakteinheit schließen jedoch andere Realisierungsformen nicht aus. So ist es beispielsweise ebenfalls möglich, die Kontakteinheit - gegebenenfalls unter speziellen konstruktiven Randbedingungen - um eine quer zur Fahrzeuglängsachse verlaufende Achse ebenfalls von der Ruhestellung in die Arbeitsstellung zu verschwenken.

Prinzipiell ist bei der erfindungsgemäßen Lösung vorgesehen, daß die Kontakteinheit mit einem für diese vorgesehenen Schwenkarm versehen ist. Beispielsweise ist vorstellbar, neben dem Kugelhals mit der Kupplungskugel die in Arbeitsstellung stehende und einen eigenen Schwenkarm aufweisende Kontakteinheit vorzusehen und andererseits vorzusehen, daß diese dann um die Schwenkachse aus dem für einen optimalen Zugriff geeigneten, bei abgenommenem oder in eine Ruhestellung bewegtem Kugelhals jedoch störenden Ort in die Ruhestellung verschwenkbar ist.

Ein besonders vorteilhaftes Ausführungsbeispiel der erfindungsgemäßen Lösung sieht vor, auch den Kugelhals um eine Achse verschwenkbar zu machen und Kugelhals und Kontakteinheit gemeinsam zu verschwenken.

Die einfachste Ausführungsform einer derartigen Lösung sieht dabei vor, daß der Kugelhals auch den Schwenkarm für die Kontakteinheit darstellt, d. h., daß die Kontakteinheit unmittelbar am Kugelhals selbst angeordnet ist.

Insbesondere dann, wenn eine konventionelle Kontakteinheit in Form einer Steckdose vorgesehen ist, ist vorzugsweise ein Gehäuse der Kontakteinheit unmittelbar am Kugelhals neben der Kupplungskugel angeordnet.

Besonders zweckmäßig ist es, wenn das Gehäuse der Kontakteinheit zwischen der Kupplungskugel und dem hinteren Stoßfänger am Kugelhals angeordnet ist.

Das Gehäuse kann dabei ein auf den Kugelhals aufgesetztes Gehäuse sein.

Es ist beispielsweise sogar möglich, um die Zugänglichkeit noch weiter zu verbessern, daß das Gehäuse relativ zu dem Kugelhals, vorzugsweise begrenzt, verschwenkbar ist, um dieses besonders einfach zugänglich zu machen.

Eine andere zweckmäßige Lösung sieht vor, daß das Gehäuse der Kontakteinheit an den Kugelhals angeformt ist, beispielsweise ein integraler Bestandteil des Kugelhalses selbst ist. In diesem Fall ist es beispielsweise möglich, daß neben dem Kugelhals in der bislang bekannten Form das Gehäuse für die Kontakteinheit angeformt liegt.

Eine andere Lösung sieht vor, daß ein Teilbereich des Kugelhalses als Gehäuse für die Kontakteinheit ausgeformt ist.

In den Fällen, in denen das Gehäuse für die Kontakteinheit integraler Bestandteil des Kugelhalses ist, ist beispielsweise vorgesehen, den Kugelhals als Gußteil auszubilden.

Bei einem weiteren Ausführungsbeispiel ist vorteilhafterweise vorgesehen, daß der abgekröpfte Endbereich des Kugelhalses und das Gehäuse der Kontakteinheit in der Ruhestellung auf einer der Fahrbahnoberfläche abgewandten Seite einer in Höhe eines tiefsten Punktes der in Ruhestellung stehenden Kupplungskugel verlaufenden horizontalen Ebene liegt und daß die horizontale Ebene mindestens in Höhe des tiefsten Punktes des in Arbeitsstellung stehenden Kugelhalses liegt. Mit dieser Definition der Ruhestellung ist sichergestellt, daß die Kupplungskugel den tiefsten Punkt der Einheit aus Kugelhals und Kupplungskugel definiert und der Kugelhals mit dem abgekröpften Ende und dem Gehäuse der Kontakteinheit sich maximal bis zu diesem Punkt erstreckt, vorzugsweise jedoch aus Gründen einer raumsparenden Anordnung höher liegt.

Noch vorteilhafter ist es, wenn der gesamte Kugelhals mit dem Gehäuse der Kontakteinheit, insbesondere mit dem Lagerelement, in der Ruhestellung auf einer der Fahrbahnfläche abgewandten Seite einer in Höhe des tiefsten Punktes der in Ruhestellung stehenden Kupplungskugel verlaufenden horizontalen Ebene liegt, so daß der gesamte Kugelhals sich maximal bis zu dieser Ebene, vorzugsweise auf der der Fahrbahnoberfläche abgewandten Seite dieser Ebene erstreckt.

Bei einer Anhängekupplung, bei der der Kugelhals den Schwenkarm für die Kontakteinheit bildet, ist vorzugsweise vorgesehen, daß eine Projektion einer Kupplungskugelmittelachse auf die vertikale Längsebene beim Schwenken des Kugelhalses um die Schwenkachse von der Arbeitsstellung in die Ruhestellung eine Drehung um einen Winkel von mindestens 80° erfährt und daß ein tiefster Punkt von Kugelhals mit Kontakteinheit und Kupplungskugel in der Ruhestellung mindestens in Höhe eines tiefsten Punktes des Kugelhalses in Arbeitsstellung liegt.

Bei einer derartigen Drehung der Projektion der Kupplungskugelmittelachse auf die Längsebene erfolgt gleichzeitig eine entsprechende Drehung des Kugelhalses mit der Kontakteinheit, so daß der Kugelhals mit Kontakteinheit durch die Schwenkbewegung um die Schwenkachse so weit geneigt wird, daß er mit seinem tiefsten Punkt mindestens genau so hoch über der Fahrbahnoberfläche liegt als in Arbeitsstellung und somit die Einheit aus Kugelhals, Kontakteinheit und Kupplungskugel in der Ruhestellung die Bodenfreiheit nicht beeinträchtigt.

Besonders vorteilhaft ist es, wenn die Projektion der Kupplungskugelmittelachse auf die vertikale Längsebene beim Schwenken um die Schwenkachse eine Drehung von mehr als 90°, noch besser mehr als 100° und bevorzugterweise mehr als 120° erfährt. Insbesondere bei einem Verschwenken der Kupplungskugelmittelachse um mehr als 90°, vorzugsweise mehr als 120°, läßt sich der von Kugelhals mit Kontakteinheit und Kupplungskugel in der Ruhestellung benötigte Raum noch besonders klein halten.

Die Drehung der Projektion der Kupplungskugelmittelachse auf die Längsebene beträgt maximal 210°, noch besser maximal 180°, vorzugsweise maximal 160°.

Vorzugsweise schließt die Projektion der Kupplungskugelmittelachse auf die vertikale Längsebene mit der Horizontalen einen Winkel im Bereich von ungefähr 30° bis ungefähr 150°, noch besser im Bereich von ungefähr 40° bis ungefähr 140°, ein, damit ein in Fahrzeuglängsrichtung kurz bauender Ruhestellungsraum erhältlich ist.

Mit der erfindungsgemäßen Lehre ist es möglich, die Einheit aus Kugelhals, Kontakteinheit und Kupplungskugel unter dem Stoßfänger des Kraftfahrzeugs hindurch in eine vom Stoßfänger gegen Sicht abgedeckte und somit oberhalb einer 15°-Sichtlinie liegende sowie die Bodenfreiheit nicht negativ beeinflussende Ruhestellung zu bewegen.

Eine besonders vorteilhafte Lösung ist dann möglich, wenn die Projektion der Kupplungskugelmittelachse auf die vertikale Längsebene in der Ruhestellung in einem Winkel von mindestens 170° gegenüber einer Horizontalen verläuft. Noch besser ist es, wenn die Projektion der Kupplungskugelmittelachse auf eine vertikale Längsebene in der Ruhestellung in einem Winkel von mehr als 180°, noch besser mehr als 210°, gegenüber einer Horizontalen verläuft.

Hiermit ist sichergestellt, daß die Einheit aus Kugelhals und Kupplungskugel in der Ruhestellung so weit gedreht ist, daß sie in einfacher Weise aus dem Sichtbereich herausbewegbar ist.

Eine weitere vorteilhafte Lösung läßt sich dadurch realisieren, daß die Kupplungskugel in der Ruhestellung in einem Abstand von einer Fahrbahnoberfläche angeordnet ist, der gleich oder kleiner ist als ein Abstand des abgekröpften Endbereichs von der Fahrbahnoberfläche und daß ein tiefster Punkt von Kugelhals mit Kontakteinheit und Kupplungskugel in der Ruhestellung mindestens in Höhe eines tiefsten Punktes des Kugelhalses in Arbeitsstellung liegt. Auch diese Definition legt eine Bedingung fest, welche es ermöglicht, die Einheit aus Kugelhals mit Kontakteinheit und Kupplungskugel in ausreichender Höhe über der Fahrbahnoberfläche zu positionieren.

Besonders einfach läßt sich sicherstellen, daß Kugelhals und Kupplungskugel in der Ruhestellung ausreichend weit aus dem Sichtbereich entfernt sind, wenn der Kugelhals mit Kontakteinheit und der Kupplungskugel in der Ruhestellung auf einer der Fahrbahnoberfläche abgewandten Seite einer durch eine Unterkante des Schwenklagers definierten horizontalen Ebene liegen.

Besonders vorteilhaft ist eine erfindungsgemäße Lösung dann, wenn das Schwenklager bezüglich der Krümmungsebene in Richtung einer der Ruhestellung gegenüberliegenden Seite einer Krümmungsebene des Kugelhalses unsymmetrisch versetzt angeordnet ist.

Der Versatz kann beispielsweise so gering sein, daß das Schwenklager lediglich unsymmetrisch zur Krümmungsebene des Kugelhalses liegt, jedoch noch von der Krümmungsebene geschnitten wird.

Der Versatz kann aber auch so groß sein, daß das Schwenklager oder mindestens der Schwenkkörper seitlich neben der Krümmungsebene des Kugelhalses liegt.

Die Kontakteinheit ist vorzugsweise eine konventionelle Steckeinheit. Bei einem anderen Beispiel ist vorzugsweise die Kontakteinheit in die Kupplungskugel integriert und somit in besonders zweckmäßiger Weise gemeinsam mit dieser verschwenkbar, so daß sich insbesondere bei dieser Lösung die Integration des Schwenkarms mit der Kontakteinheit in Kugelhals und Kupplungskugel anbietet.

Im Zusammenhang mit der bisherigen Erläuterung der einzelnen Ausführungsbeispiele wurde nicht im näheren erläutert, wie die Durchführung der Schwenkbewegung erfolgen soll. Beispielsweise wäre es möglich, die Schwenkbewegung durch unmittelbares Einwirken auf den Kugelhals mit der Hand oder mittels eines handbetätigten Antriebs, beispielsweise mit einer Kurbel, durchzuführen.

Besonders vorteilhaft ist jedoch die erfindungsgemäße Lösung dann, wenn zur Durchführung der Schwenkbewegung um die Schwenkachse ein einen Motor aufweisender, vorzugsweise einen Elektromotor aufweisender elektrischer Antrieb vorgesehen ist, so daß mit dem Motor ein selbsttätig ablaufendes Verschwenken von Kugelhals mit Kontakteinheit und Kupplungskugel zwischen der Arbeitsstellung und der Ruhestellung durchführbar ist.

Hinsichtlich der Wirkung des Antriebs auf das Lagerelement zur Durchführung der Schwenkbewegung sind alle möglichen Lösungen eines zwischengeschalteten Getriebes denkbar. Besonders vorteilhaft ist es jedoch, wenn der Antrieb über ein selbsthemmendes Getriebe auf das Lagerelement wirkt, da in diesem Fall bereits das selbsthemmende Getriebe dazu eingesetzt werden kann, den Kugelhals mit der Kupplungskugel in der Ruhestellung und/oder der Arbeitsstellung zu fixieren. Außerdem wirken keine auf die Kupplungskugel wirkenden Kräfte als Momente auf den Motor des Antriebs zurück, so daß der Motor lediglich so ausgelegt sein muß, daß er in der Lage ist, ohne Krafteinwirkung auf Kupplungskugel und Kugelhals diese zwischen der Arbeitsstellung und der Ruhestellung zu verschwenken.

Um die Arbeitsstellung und/oder die Ruhestellung eindeutig zu definieren, ist vorzugsweise vorgesehen, daß die Schwenkbewegung des Kugelhalses durch einen fahrzeugfesten Anschlag begrenzt ist. Vorzugsweise ist dies ein Anschlag, welcher auf das Lagerelement wirkt.

Im einfachsten Fall ist bei einer derartigen Lösung vorgesehen, daß das Lagerelement einen Vorsprung aufweist, welcher zumindest in der Ruhestellung oder der Anschlagstellung gegen den fahrzeugfesten Anschlag wirkt.

Bevorzugt wird in diesem Fall mit dem gegen einen fahrzeugfesten Anschlag wirkenden Vorsprung die Arbeitsstellung festgelegt, während die Ruhestellung des Kugelhalses beispielsweise auch dadurch festlegbar ist, daß der Kugelhals selbst mit irgendeinem Bereich desselben in der Ruhestellung an einer fahrzeugfesten Anschlagefläche zur Anlage kommt.

Wie bereits im Vorstehenden erläutert, ist durch ein selbsthemmendes Getriebe bereits sichergestellt, daß der Kugelhals mit der Kupplungskugel in der Arbeitsstellung stehen bleibt, auch wenn, beispielsweise durch einen Anhänger, auf die Kupplungskugel die üblichen Zug- und Bremskräfte wirken.

Um jedoch ein Höchstmaß an Sicherheit zu bieten, ist ergänzend oder alternativ zu einem selbsthemmenden Getriebe vorgesehen, daß der Kugelhals in der Arbeitsstellung durch eine Verriegelungsvorrichtung fixierbar ist. Durch eine derarte Verriegelungsvorrichtung besteht die Möglichkeit, in gleicher Weise wie bei den bisher bekannten manuell abnehmbaren und einsetzbaren Kupplungen, den Kugelhals in der Arbeitsstellung betriebssicher zu fixieren.

Vorzugsweise ist dabei die Verriegelungsvorrichtung so ausgebildet, daß sie bei Erreichen der Arbeitsstellung des Kugelhalses selbsttätig in eine verriegelnde Stellung übergeht und somit den Kugelhals in der Arbeitsstellung fixiert. Damit ist sichergestellt, daß - insbesondere bei Betreiben der erfindungsgemäßen Lösung mittels eines elektrischen Antriebs - der Kugelhals bei Erreichen der Arbeitsstellung zwangsläufig in dieser Arbeitsstellung verriegelt wird.

Bei einer derarten Verriegelungsvorrichtung ist zweckmäßigerweise vorgesehen, daß diese zum Lösen der verriegelnden Stellung über einen Auslöser betätigbar ist.

Der Auslöser kann auf die unterschiedlichste Art und Weise betätigbar sein. Im einfachsten Fall wäre es denkbar, einen manuellen Auslöser vorzusehen. Besonders vorteilhaft ist es jedoch, insbesondere im Zusammenhang mit einem einen Motor aufweisenden Antrieb, wenn der Auslöser durch einen Auslöserantrieb betätigbar ist. Ein derartiger Auslöserantrieb könnte beispielsweise ein den Auslöser betätigender Magnet sein.

Eine besonders zweckmäßige Lösung, insbesondere hinsichtlich der Einfachheit und Kostengünstigkeit des Aufbaus, sieht vor, daß der Auslöser von dem Antrieb zum Schwenken des Kugelhalses betätigbar ist, d. h., daß beispielsweise der Antriebsmotor, mit welchem der Kugelhals verschwenkbar ist, gleichzeitig auch dazu eingesetzt wird, den Auslöser zu betätigen.

Hinsichtlich der Fixierung des Schwenklagers am Fahrzeug sind die unterschiedlichsten Lösungen denkbar. Beispielsweise wäre es denkbar, das Schwenklager an der Stoßfängereinheit des Kraftfahrzeugs zu fixieren.

Eine besonders vorteilhaft einbaubare Lösung sieht vor, daß das Schwenklager an einem ungefähr in derselben Orientierung wie der hintere Stoßfänger quer zur Fahrzeuglängsrichtung verlaufenden Querträgerkörper gehalten ist. Ein derartiger Querträgerkörper schafft die Möglichkeit, beim Ausrüsten der Fahrzeuge eine von der Stoßfängereinheit unabhängige Fixierung zu schaffen.

Besonders vorteilhaft ist es, wenn der Querträgerkörper zwischen zwei zusätzliche Teile bildenden Seitenträgern angeordnet und mit diesen verbunden ist und wenn die Seitenträger zu fahrzeugseitigen Haltepunkten verlaufen. Somit sind zur Fixierung des Schwenklagers am Fahrzeug drei Baueinheiten vorzusehen, wobei der Querträgerkörper und die Seitenträger vormontierbar sind, so daß die gesamte Einheit aus Querträgerkörper und Seitenträger an fahrzeugseitigen Haltepunkten zu montieren ist.

Die Unterteilung der Fixierung des Schwenklagers in einen Querträgerkörper und zwei seitliche Seitenträger erlaubt es, in einfacher Weise eine Adaption an unterschiedlichste Fahrzeugtypen vorzunehmen, dergestalt, daß der Querträgerkörper, welcher das Schwenklager trägt, stets dieselbe Einheit bei unterschiedlichen Fahrzeugtypen darstellt, während die Adaption auf die unterschiedlichen Fahrzeugtypen über die Seitenträger realisierbar ist, die dann an die in den unterschiedlichen Fahrzeugtypen zur Verfügung stehenden Haltepunkte anzupassen sind.

Eine besonders günstige Anpassung an unterschiedlichste Fahrzeugtypen ist dann möglich, wenn der Querträgerkörper über eine bezogen auf eine quer zur Fahrzeuglängsrichtung verlaufende Querachse in verschiedenen Drehstellungen fixierbare Verbindung an den Seitenträgern befestigbar ist. Dies erlaubt einerseits eine feste Verbindung zwischen dem Querträgerkörper und den Seitenträgern bei der Herstellung derselben vorzusehen, andererseits einen zusätzlichen Freiheitsgrad in der Adaption der Einheit aus Querträgerkörper und Seitenträgern an einzelne Fahrzeugtypen zu haben, nämlich dadurch, daß der Querträgerkörper in unterschiedlichen Drehstellungen relativ zu den Seitenträgern montierbar ist.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine Draufsicht auf ein Fahrzeug mit einer erfindungsgemäßen Anhängekupplung von hinten mit teilweise weggebrochener Stoßfängereinheit, wobei die Bildebene eine vertikale, senkrecht zur Fahrzeuglängsrichtung verlaufende Querebene darstellt;
- Fig. 2: einen Schnitt durch einen hinteren Teil des Fahrzeugs im Bereich der erfindungsgemäßen Kupplung längs Linie 2-2 in Fig. 1, wobei die Bildebene eine zu der Fahrzeuglängsrichtung parallel verlaufende vertikale Längsebene ist;
- Fig. 3: eine Draufsicht auf die erfindungsgemäße Kupplung in Richtung des Pfeils A in Fig. 1, wobei die Bildebene eine horizontale Ebene ist;
- Fig. 4: einen Schnitt längs Linie 4-4 in Fig. 1;

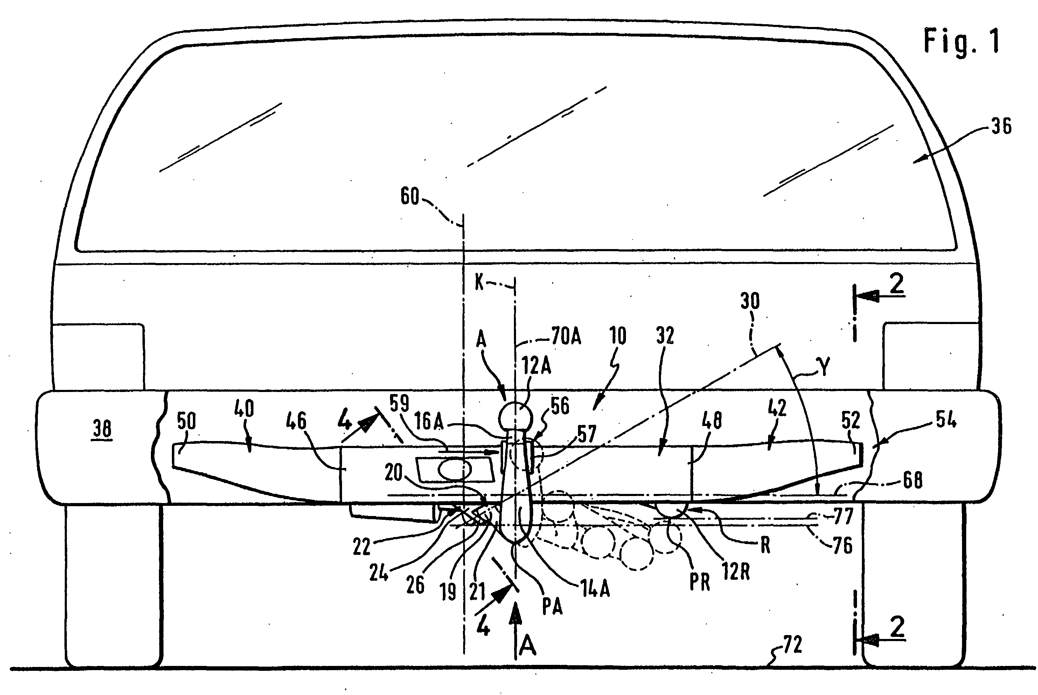

Ein in Fig. 1 bis 3 dargestelltes, als Ganzes mit 10 bezeichnetes Ausführungsbeispiel einer erfindungsgemäßen Anhängekupplung umfaßt eine Kupplungskugel 12, welche von einem Kugelhals 14 getragen ist, wobei der Kugelhals 14 einen abgekröpften Endbereich 16 aufweist, auf welchem die Kupplungskugel 12 unmittelbar sitzt und diesem abgekröpften Endbereich 16 gegenüberliegend einen unteren Endbereich 18 aufweist, welcher mit einem Lagerelemeht 20 verbunden ist, wobei dieses Lagerelement 20 in einem Schwenklager 22, beispielsweise umfassend einen Lagerkörper 24 mit zwei Lagerflanschen 26 und 28, um eine Schwenkachse 30 verschwenkbar ist.

Das Lagerelement 20 umfaßt vorzugsweise einen im Schwenklager 22, beispielsweise zwischen den Lagerflanschen 26 und 28 liegenden Schwenkkörper 19 und einen sich vom Schwenkkörper 19 zum Endbereich 18 des Kugelhalses 14 erstreckenden Arm 21, wobei der Arm in Arbeitsstellung A des Kugelhalses 14A schräg zur Krümmungsebene K verläuft, und zwar in einer der Ruhestellung R des Kugelhalses entgegengesetzten Richtung, so daß der Schwenkkörper 19 im wesentlichen seitlich der Krümmungsebene K liegt.

Das Schwenklager 22 ist seinerseits an einem als Ganzes mit 32 bezeichneten Querträgerkörper gehalten, der sich quer zu einer Fahrzeuglängsrichtung 34 eines als Ganzes mit 36 bezeichneten Kraftfahrzeugs und längs einer hinteren Stoßfängereinheit 38 desselben erstreckt.

Der Querträgerkörper 32 sitzt dabei vorzugsweise zwischen zwei Seitenträgern 40 und 42, welche sich an in einer senkrecht zur Fahrzeuglängsrichtung 34 verlaufenden Fahrzeugquerrichtung 44 einander gegenüberliegenden Enden 46 und 48 des Querträgerkörpers 32 anschließen und sich bis zu seitlichen Befestigungsbereichen 50, 52 an einer Fahrzeugkarosserie 54 erstrecken.

In den Befestigungsbereichen 50 und 52 erfolgt die Verbindung der erfindungsgemäßen Anhängekupplung mit der Fahrzeugkarosserie 54.

An dem Kugelhals 14 sitzt eine Steckdose 56 mit elektrischen Anschlüssen zur elektrischen Versorgung eines Anhängers.

Die Steckdose 56 umfaßt ein Steckdosengehäuse 57, das quer zur Krümmungsebene K des Kugelhalses eine Ausdehnung aufweist, welche ungefähr der der Kupplungskugel 12 entspricht.

Ferner weist das Gehäuse in Richtung der Krümmungsebene K eine Ausdehnung auf, welche maximal bis zu einer senkrecht zur Kupplungskugelmittelachse 70 in Höhe des Kupplungskugelansatzes verlaufenden Ebene 58 reicht, um sicherzustellen, daß ein die Kupplungskugel übergreifendes Anhängerkupplungsteil nicht mit dem Steckdosengehäuse 57 kollidiert.

Im einfachsten Fall ist die Steckdose 56 so aufgebaut, daß ein anhängerseitiger Stecker in einer quer oder schräg zur Krümmungsebene verlaufenden Einsteckrichtung 59 einsteckbar ist.

Im einfachsten Fall ist das Steckdosengehäuse symmetrisch zur Krümmungsebene K angeordnet. Es ist aber auch möglich, insbesondere um das Einstecken des anhängerseitigen Steckers zu ermöglichen, das Gehäuse gegenüber der Krümmungsebene K geneigt anzuordnen.

Die Schwenkachse 30 verläuft schräg zu einer parallel zur Fahrzeuglängsrichtung 34 verlaufenden vertikalen Längsebene 60, wobei die Projektion der Schwenkachse 30 in eine horizontale Ebene 62 mit der Längsebene 60 oder der Fahrzeuglängsrichtung 34 einen Winkel α einschließt, welcher beispielsweise im Bereich zwischen ungefähr 50° und ungefähr 60°, vorzugsweise bei ungefähr 55° liegt.

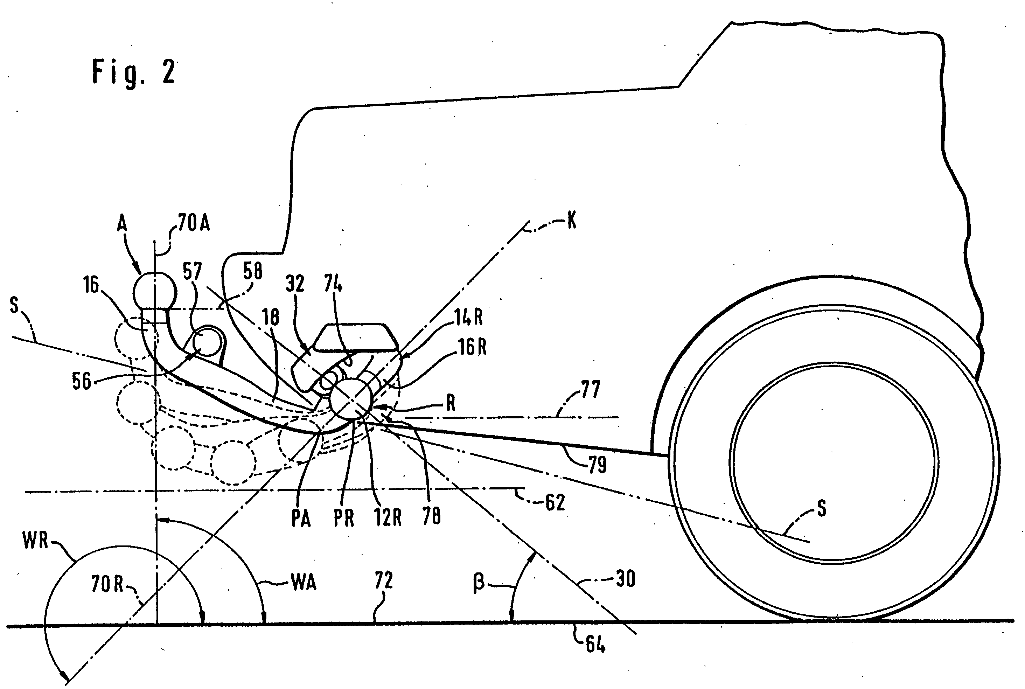

Darüber hinaus schließt die Projektion der Schwenkachse 30 in die Längsebene 60 - wie in Fig. 2 dargestellt - mit einer in der Längsebene 60 verlaufenden Horizontalen 64 einen Winkel β, der beispielsweise im Bereich von ungefähr 35° bis ungefähr 45°, vorzugsweise bei ungefähr 40° liegt.

Ferner schließt die Projektion der Schwenkachse 30 in eine parallel zur Fahrzeugquerrichtung 44 und senkrecht zur Längsebene 60 stehende vertikale Querebene 66 - wie in Fig. 1 dargestellt - mit einer in dieser verlaufenden Horizontalen 68 einen Winkel γ, der beispielsweise im Bereich von ungefähr 25° bis ungefähr 35°, vorzugsweise bei ungefähr 30° liegt.

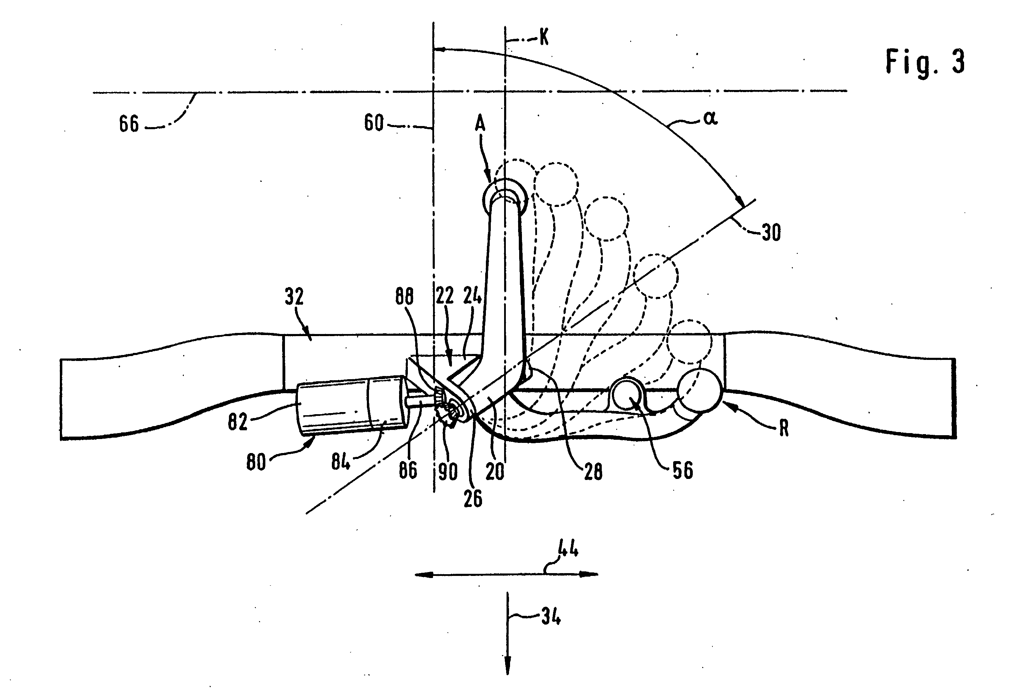

Der Kugelhals 14 ist um die Schwenkachse 30 von einer Arbeitsstellung A, in welcher eine Kupplungskugelmittelachse 70 ungefähr senkrecht auf der horizontalen Ebene 62 steht und der Kugelhals 14, wie in Fig. 1 und 3 dargestellt, in einer zur Längsebene 60 und durch die Kupplungskugelmittelachse 70 hindurch verlaufende Krümmungsebene K gekrümmt bis zum Lagerelement 20 verläuft, in eine Ruhestellung R schwenkbar.

In der Ruhestellung R verläuft die Kupplungskugelmittelachse 70R schräg zur horizontalen Ebene 62, wobei sich ausgehend von der in Ruhestellung stehenden Kupplungskugel 12R der sich an diesen anschließende gekröpfte Endbereich 16R des Kugelhalses 14R von einer einer Fahrbahnoberfläche 72 abgewandten Seite der Kupplungskugel 12R ausgehend erstreckt. D. h. mit anderen Worten, daß die Kupplungskugel 12A in der Arbeitsstellung A von der Fahrbahnoberfläche 12 weg nach oben weist und sich der Kugelhals 14 ausgehend von der Kupplungskugel 12A in Richtung der Fahrbahnoberfläche 72 nach unten erstreckt, während in der Ruhestellung R die Kupplungskugel 12R zur Fahrbahnoberfläche 72 hinweist, während sich der Kugelhals 14R ausgehend von der Kupplungskugel 12R nach oben, d. h. von der Fahrbahnoberfläche 72 weg in einem Bogen bis zum Schwenklager 22 erstreckt.

Insbesondere erstreckt sich in der Ruhestellung R der Kugelhals 14R längs des Querträgerkörpers 32, vorzugsweise möglichst nahe an einer der Fahrbahnoberfläche 72 zugewandten Unterseite 74 desselben, um einen möglichst kleinen Ruhestellungsraum 78 zur Aufnahme des Kugelhalses 14R der Kupplungskugel 12R in der Ruhestellung R zu erhalten. Dabei weist die Steckdose 56 mit dem Steckdosengehäuse ungefähr in dieselbe Richtung wie die Kupplungskugel 12 und läßt sich in gleicher Weise in dem Ruhestellungsraum anordnen wie die Kupplungskugel, wobei die Tatsache, daß das Steckdosengehäuse 57 quer zur Krümmungsebene K ungefähr dieselbe Ausdehnung aufweist wie Kugelhals 14 und Kupplungskugel 12, auch die Unterbringung des Steckdosengehäuses 57 ohne zusätzlichen Platzbedarf in dem Ruhestellungsraum 78 ermöglicht.

Ferner ist in der Ruhestellung R der Kugelhals 14R mit der Kupplungskugel 12R im wesentlichen oberhalb einer die Bodengruppe der Karosserie oder die Stoßfängereinheit 38 berührenden, in der Längsebene 60 verlaufenden und 15° gegenüber der Fahrbahnoberfläche 72 geneigten Sichtlinie S angeordnet, um den Kugelhals 14R mit der Kupplungskugel 12R im wesentlichen für eine außenstehende Person unsichtbar zu positionieren.

Zur Veranschaulichung der Schwenkbewegung des Kugelhalses 14 mit der Kupplungskugel 12 von der Arbeitsstellung A in die Ruhestellung R sind in den Figuren 1 bis 3 die Arbeitsstellung A und die Ruhestellung R derselben durchgezogen gezeichnet, während Zwischenstellungen zwischen beiden gestrichelt angedeutet sind.

Dabei ist zu erkennen, daß aufgrund der Schräglage der Schwenkachse 30 der sich zunächst in der Arbeitsstellung A parallel zur Längsebene 60 mit seiner Krümmungsebene K erstreckende Kugelhals 14 in eine Stellung übergeht, in welcher sich dessen Krümmungsebene K schräg und/oder quer zur Längsebene 60 erstreckt.

Die Bewegung des Kugelhalses 14 mit der Kupplungskugel 12 und insbesondere die Verschwenkung derselben lassen sich - wie in Fig. 2 dargestellt - besonders einfach durch die Darstellung der Projektion der Kupplungskugelmittelachse 70 auf die vertikale Längsebene 60 oder eine zu dieser parallelen Ebene beschreiben. In der Arbeitsstellung A weist die Projektion der Kupplungskugelmittelachse 70A in die Längsebene 60 einen Winkel WA mit der Horizontalen 64 von ungefähr 90° auf. Die Kupplungskugelmittelachse 70 wird während des Verschwenkens des Kugelhalses 14 mit der Kupplungskugel 12 von der Arbeitsstellung A in die Ruhestellung R so weit verschwenkt, daß die Projektion der Kupplungskugelmittelachse 70 in der Längsebene 60 eine Drehung erfährt, und zwar so weit, daß die Projektion der Kupplungskugelmittelachse 70R in Ruhestellung in der Längsebene 60 mit der Horizontalen 64 einen Winkel WR einschließt, welcher größer als 180° ist. Der Winkel beträgt vorzugsweise mehr als 225°.

Um insbesondere den Kugelhals 14R und die Kupplungskugel 12R in der Ruhestellung R möglichst für einen Betrachter des Kraftfahrzeugs 36 unsichtbar werden zu lassen, liegt in der Ruhestellung R die Kupplungskugel 12R auf einer der Fahrbahnoberfläche 72 abgewandten Seite einer horizontalen Ebene 76, deren Höhe über der Fahrbahnoberfläche 72 durch eine Unterkante des Schwenklagers 22 definiert ist, oder berührt diese horizontale Ebene 76, so daß ein tiefster Punkt PR vom Kugelhals 14R und Kupplungskugel 12R in Ruhestellung - in diesem Fall der tiefste Punkt PR der Kupplungskugel 12R in einer horizontalen Ebene 77 - höher liegt als die horizontale Ebene 76 (Fig. 1) und höher als ein tiefster Punkt PA des Kugelhalses 12A in Arbeitsstellung A.

Vorzugsweise liegen der Kugelhals 14R und die Kupplungskugel 12R in der Ruhestellung R in einem Ruhestellungsraum 78, welcher zwischen der hinteren Stoßfängereinheit 38 und der Fahrzeugkarosserie 54 liegt und sich längs der Stoßfängereinheit 38 in der Fahrzeugquerrichtung 44 erstreckt.

Vorzugsweise liegt der Ruhestellungsraum 78 oberhalb einer durch eine Bodengruppe der Fahrzeugkarosserie und der Stoßfängereinheit 38 definierten bodenseitigen Fläche 79 des Kraftfahrzeugs 36 (Fig. 2).

Zum Antreiben der Schwenkbewegung des Kugelhalses 14 mit der Kupplungskugel 12 um die Schwenkachse 30 ist ein als Ganzes mit 80 bezeichneter Antrieb vorgesehen, welcher einen elektrischen Motor 82 sowie beispielsweise ein selbsthemmendes oder selbstsperrendes Getriebe 84 umfaßt. Auf einer Abtriebswelle 86 des Getriebes 84 sitzt ein Kegelrad 88, mit welchem ein Kegelrad 90 antreibbar ist, welches drehfest mit dem Lagerelement 20 verbunden ist und vorzugsweise auf einer der Fahrbahnoberfläche 72 zugewandten Seite des Lagerelements 20 sitzt.

Das selbstsperrende Getriebe 84 ist so ausgebildet, daß es gegenüber von seiten der Abtriebswelle 86 wirkenden Drehmomenten blockiert und nur über den Motor 82 antreibbar ist. Beispielsweise ist das selbstsperrende Getriebe 84 als Schneckengetriebe ausgebildet.

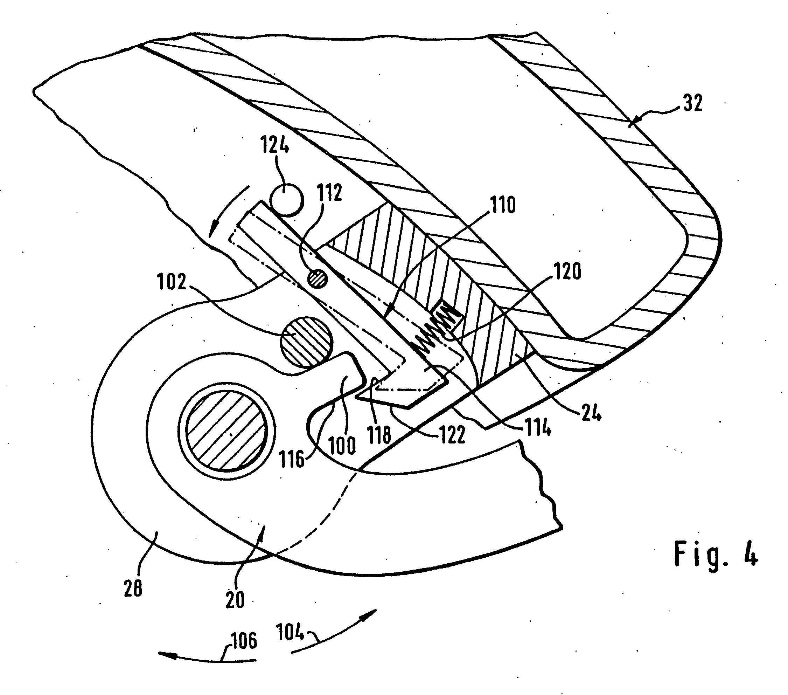

Zur genauen Festlegung der Arbeitsstellung A ist, wie in Fig. 4 dargestellt, das Lagerelement 20 beispielsweise mit einem nasenähnlichen Vorsprung 100 versehen, welcher in der Arbeitsstellung an einem fest mit dem Querträgerkörper 32 verbundenen Anschlag 102 anliegt, wobei der Anschlag 102 beispielsweise als ein sich zwischen den Lagerflanschen 26 und 28 erstreckender Bolzen ausgebildet ist.

Bei einer Einschwenkbewegung in Richtung 104 in die Arbeitsstellung A kommt dabei der Vorsprung 100 an dem Anschlag 102 zur Anlage.

Erfolgt bei der erfindungsgemäßen Lösung der Antrieb über das selbsthemmende Getriebe 84 oder das Schneckenrad 92 mit dem Zahnrad 94, welches ebenfalls als selbsthemmendes Getriebe wirkt, so wäre es prinzipiell nicht notwendig, bei Anlegen des Vorsprungs 100 an dem Anschlag 102 eine zusätzliche Sicherung vorzusehen, da das selbsthemmende Getriebe 84 bzw. 92, 94 einer Ausschwenkbewegung in Richtung des Pfeils 106 aus der Arbeitsstellung A heraus entgegenwirkt und diese nicht zuläßt.

Zur Sicherung des Kugelhalses 14A in der Arbeitsstellung A ohne Vorhandensein eines selbsthemmenden Getriebes oder zur zusätzlichen Sicherheit bei Vorhandensein eines selbsthemmenden Getriebes ist eine Verriegelungsvorrichtung 110 vorgesehen, welche beispielsweise eine schwenkbar um eine Achse 112 gelagerte Verriegelungsklinke 114 aufweist, welche in ihrer den Kegelhals 14A in Arbeitsstellung A verriegelnden Stellung, dargestellt in Fig. 4 mit durchgezogenen Linien, den Vorsprung 100 auf einer dem Anschlag 102 gegenüberliegenden Seite 116 hintergreift und mit einer Verriegelungsfläche 118 gegen eine Bewegung in Ausschwenkrichtung 106 fixiert, so daß der Vorsprung 100 zwischen der Verriegelungsfläche 118 und dem Anschlag 102 gegen ein Verschwenken gesichert ist.

Um die Verriegelungsklinke 114 in ihrer verriegelnden Stellung zu halten, ist beispielsweise eine Feder 120 vorgesehen, welche die Verriegelungsklinke 114 in Richtung ihrer verriegelnden Stellung beaufschlagt und sich beispielsweise an dem Lagerkörper 24 abstützt.

Um zu ermöglichen, daß der Vorsprung 100 bei Bewegung des Lagerelements 20 in Einschwenkrichtung 104 in die Stellung zwischen dem Anschlag 102 und der Verriegelungsfläche 118 einschwenken kann, ist die Verriegelungsklinke 114 noch mit einer Einlaufschräge 122 versehen, welche in einem spitzen Winkel gegenüber der Verriegelungsfläche 118 verläuft und dem sich in Einschwenkrichtung 104 nähernden Vorsprung 100 zugewandt ist, so daß der sich in Einschwenkrichtung 104 bewegende und gegen die Einlaufschräge 122 wirkende Vorsprung 100 die Verriegelungsklinke 114 aus ihrer verriegelnden Stellung gegen die Wirkung der Feder 120 herausbewegt und somit die Möglichkeit hat, über die Einlaufschräge 122 hinweg sich in seine Arbeitsstellung A zu bewegen, in welcher er an dem Anschlag 102 anliegt. In dieser Arbeitsstellung A des Vorsprungs 100 bewegt sich die Verriegelungsklinke 114 wieder in Richtung ihrer verriegelnden Stellung, wobei die Verriegelungsfläche 118 die Seite 116 des Vorsprungs 100 hintergreift und diesen fixiert.

Um den Vorsprung 100 aus seiner in Arbeitsstellung A verriegelten Stellung herausbewegen zu können, ist eine Betätigung der Verriegelungsklinke 114 erforderlich, die diese in ihre gestrichelt in Fig. 4 angedeutete entriegelnde Stellung bewegt. Im einfachsten Fall erfolgt die Betätigung der Verriegelungsklinke 114 manuell.

Diese Betätigung der Verriegelungsklinke 114 erfolgt bei Vorhandensein eines motorischen Antriebs 80, 80' vorzugsweise über einen von dem Antrieb 80 oder 80' bewegbaren Nocken 124, wobei der Nocken 124 beispielsweise durch ein reibschlüssig angetriebenes Element erfolgt, welches beim Loslaufen des Antriebs den Nocken 124 gegenüber dem Lagerelement 20 vorauseilend antreibt, so daß die Verriegelungsklinke 114 bereits in ihrer in Fig. 4 gestrichelt angedeuteten entriegelnden Stellung steht, bevor der Vorsprung 100 sich von dem Anschlag 102 in Ausschwenkrichtung 106 wegbewegt. Ein derartiges Vorauseilen des Antriebs des Nockens 124 ist beispielsweise durch ein Spiel zwischen dem über Reibschluß angetriebenen und den Nocken 124 bewegenden Element und dem Antrieb des Lagerelements 20, beispielsweise über das Kegelrad 90 oder das Zahnrad 94, realisierbar.

## Patentansprüche

1. Einheit umfassend einen Stoßfänger und eine Anhängekupplung für Kraftfahrzeuge, insbesondere Personenkraftfahrzeuge, mit einer Kupplungskugel, (12), mit einem Kugelhals (14) der zwischen einer Arbeitstellung und einer Ruhestellung welche zwischen dem hinteren stoßfänger (38) und der Fahrzeugkarosserie liegt, dessen einer Endbereich abgekröpft ist und die Kupplungskugel (12) trägt, und mit einer Kontakteinheit (56) zur Herstellung einer Verbindung zwischen einer Fahrzeugelektrik und einer Anhängerelektrik, welche an einem Schwenkarm (14) gehalten ist, wobei der Schwenkarm (14) an einem fahrzeugfesten Schwenklager (22) um eine Schwenkachse (30) schwenkbar gelagert ist, so daß die Kontakteinheit (56) mit dem Schwenkarm (14) durch eine Schwenkbewegung um die Schwenkachse (30) von einer Arbeitsstellung (A) in eine Ruhestellung (R) und umgekehrt bewegbar ist,
**dadurch gekennzeichnet, daß** die Kontakteinheit (56) derart um die Schwenkachse (30) schwenkbar gelagert ist, daß die Kontakteinheit (56) in der Arbeitsstellung (A) im wesentlichen auf einer der Fahrzeugkarosserie (54) abgewandten Seite des hinteren Stoßfängers (38) steht, und daß die Kontakteinheit (56) in der Ruhestellung in einem den Kugelhals (14) aufnehmenden Ruhestellungsraum (78) angeordnet ist, welcher zwischen dem hinteren Stoßfänger (38) und der Fahrzeugkarosserie (54) liegt.

2. Einheit nach einem der voranstehenden Ansprüche, **dadurch gekennzeichnet, daß** die Kontakteinheit (56) in der Arbeitsstellung höher angeordnet ist als eine Unterkante des Stoßfängers (38).

3. Einheit nach einem der voranstehenden Ansprüche, **dadurch gekennzeichnet, daß** die Kontakteinheit (56) in der Arbeitsstellung (A) niedriger angeordnet ist als die Kupplungskugel (12).

4. Einheit nach einem der voranstehenden Ansprüche, **dadurch gekennzeichnet, daß** die Kontakteinheit (56) in der Ruhestellung (R) auf einer der Fahrzeugkarosserie (54) zugewandten Seite des hinteren Stoßfängers (38) angeordnet ist.

5. Einheit nach einem der voranstehenden Ansprüche, **dadurch gekennzeichnet, daß** der Ruhestellungsraum (78) im wesentlichen oberhalb einer durch eine Bodengruppe und den hinteren Stoßfänger (38) des Kraftfahrzeugs (36) definierten bodenseitigen Fläche (79) liegt.

6. Einheit nach einem der voranstehenden Ansprüche, **dadurch gekennzeichnet, daß** das Schwenklager (22) an einem den Kugelhals (14) tragenden Basisteil (32) gehalten ist.

7. Einheit nach einem der voranstehenden Ansprüche, **dadurch gekennzeichnet, daß** die Schwenkachse (30) schräg zu einer zur Fahrzeuglängsrichtung (34) parallelen vertikalen Längsebene (60) verläuft.

8. Einheit nach einem der voranstehenden Ansprüche, **dadurch gekennzeichnet, daß** die Projektion der Schwenkachse (30) auf eine zur Fahrzeuglängsrichtung (34) parallele vertikale Längsebene (60) in einem Winkel (β) gegenüber der Horizontalen (64) geneigt ist, welcher in einem Winkelbereich von ungefähr 0° bis ungefähr 60° liegt.

9. Einheit nach Anspruch 8, **dadurch gekennzeichnet, daß** der Winkelbereich bis maximal 50° reicht.

10. Einheit nach Anspruch 8 oder 9, **dadurch gekennzeichnet, daß** der Winkelbereich bei mindestens 15° beginnt.

11. Einheit nach einem der voranstehenden Ansprüche, **dadurch gekennzeichnet, daß** die Projektion der Schwenkachse (30) auf eine horizontale Ebene (62) um einen Winkel (α) schräg zur Fahrzeuglängsrichtung (34) verläuft, welcher in einem Winkelbereich von ungefähr 20° bis ungefähr 70° liegt.

12. Einheit nach Anspruch 11, **dadurch gekennzeichnet, daß** der Winkelbereich zwischen ungefähr 30° und ungefähr 65° liegt.

13. Einheit nach einem der voranstehenden Ansprüche, **dadurch gekennzeichnet, daß** die Projektion der Schwenkachse (30) auf eine vertikale, senkrecht zur Fahrzeuglängsrichtung (34) verlaufende Querebene (66) in einem Winkel (γ) gegenüber der Horizontalen (68) geneigt ist, welcher in einem Winkelbereich von ungefähr 0° bis ungefähr 60° liegt.

## Claims

1. Unit comprising a bumper and a trailer coupling for motor vehicles, in particular, passenger vehicles, with a coupling ball (12), with a ball neck (14) which can be brought into an operative position and a rest position, and one end region of which is angled and carries the coupling ball (12), and with a contact unit (56) for establishing a connection between a vehicle electrical system and a trailer electrical system, which is held on a pivoting arm (14) mounted on a pivot bearing (22) stationary with respect to the vehicle for pivoting movement about a pivot axis (30), so that the contact unit (56) is movable with the pivoting arm (14) by a pivoting movement about the pivot axis (30) from an operative position (A) into a rest position (R) and vice versa, **characterized in that** the contact unit (56) is mounted for pivoting movement about the pivot axis (30) such that the contact unit (56) in the operative position (A) is essentially located on a side of the rear bumper (38) facing away from the vehicle body (54), and **in that** the contact unit (56) in the rest position is arranged in a rest position space (78) accommodating the ball neck (14) and lying between the rear bumper (38) and the vehicle body (54).

2. Unit in accordance with any one of the preceding claims, **characterized in that** the contact unit (56) in the operative position is arranged higher than a lower edge of the bumper (38).

3. Unit in accordance with any one of the preceding claims, **characterized in that** the contact unit (56) in the operative position (A) is arranged lower than the coupling ball (12).

4. Unit in accordance with any one of the preceding claims, **characterized in that** the contact unit (56) in the rest position (R) is arranged on a side of the rear bumper (38) facing the vehicle body (54).

5. Unit in accordance with any one of the preceding claims, **characterized in that** the rest position space (78) is located essentially above a ground-side surface (79) defined by an underbody structure and the rear bumper (38) of the motor vehicle (36).

6. Unit in accordance with any one of the preceding claims, **characterized in that** the pivot bearing (22) is held on a base part (32) carrying the ball neck (14).

7. Unit in accordance with any one of the preceding claims, **characterized in that** the pivot axis (30) extends at an angle to a vertical longitudinal plane (60) parallel to the longitudinal direction (34) of the vehicle.

8. Unit in accordance with any one of the preceding claims, **characterized in that** the projection of the pivot axis (30) onto a vertical longitudinal plane (60) parallel to the longitudinal direction (34) of the vehicle is inclined at an angle (β) in relation to the horizontal (64) lying in an angular range of approximately 0° to approximately 60°.

9. Unit in accordance with Claim 8, **characterized in that** the angular range is up to 50° at the most.

10. Unit in accordance with Claim 8 or 9, **characterized in that** the angular range begins at at least 15°.

11. Unit in accordance with any one of the preceding claims, **characterized in that** the projection of the pivot axis (30) onto a horizontal plane (62) extends through an angle (α) at an incline to the longitudinal direction (34) of the vehicle lying in an angular range of approximately 20° to approximately 70°.

12. Unit in accordance with Claim 11, **characterized in that** the angular range is between approximately 30° and approximately 65°.

13. Unit in accordance with any one of the preceding claims, **characterized in that** the projection of the pivot axis (30) onto a vertical transverse plane (66) extending at right angles to the longitudinal direction (34) of the vehicle is inclined at an angle (γ) in relation to the horizontal (68) lying in an angular range of approximately 0° to approximately 60°.

## Revendications

1. Unité comprenant un pare-chocs et un attelage de remorque pour véhicules à moteur, en particulier véhicules de tourisme, comportant une rotule d'attelage (12), un col de rotule (14) qui peut être amené en position de travail et en position de repos et ; dont une zone d'extrémité est contre-coudée et porte la rotule d'attelage (12), ainsi qu'un bomier (56) pour réaliser une liaison entre un circuit électrique de véhicule et un circuit électrique de remorque, qui est portée sur un bras pivotant (14), le bras pivotant (14) étant porté sur un palier de pivotement (22), fixe par rapport au véhicule, avec liberté de pivotement autour d'un axe de pivotement (30), de manière que le bomier (56), puisse, avec le bras pivotant (14), passer, par un mouvement de pivotement autour de l'axe de pivotement (30), d'une position de travail (A) en une position de repos (R) et vice versa, **caractérisée en ce que** le bomier (56) est porté avec liberté de pivotement autour de l'axe de pivotement (30) de telle manière que le bomier (56), en position de travail (A), se trouve essentiellement d'un côté du pare-chocs (38) arrière opposé à la carrosserie de véhicule (54), et que le bomier (56), en position de repos, est disposé dans un espace correspondant à la position de repos (78) recevant le bras pivotant (14), qui se situe entre le pare-chocs arrière (38) et la carrosserie de véhicule (54).

2. Unité selon la revendication 1, **caractérisée en ce que** le bornier (56), en position de travail, est disposé au-dessus d'un bord inférieur du pare-chocs (38).

3. Unité selon une quelconque des revendications précédentes, **caractérisée en ce que** le bornier (56), en position de travail (A), est disposé au-dessous de la rotule d'attelage (12).

4. Unité selon une quelconque des revendications précédentes, **caractérisée en ce que** le bornier (56), en position de repos (R), est disposé d'un côté du pare-chocs arrière (38) orienté vers la carrosserie de véhicule (54).

5. Unité selon une quelconque des revendications précédentes, **caractérisée en ce que** l'espace correspondant à la position de repos (78) se situe essentiellement au-dessus d'une surface de fond (79) définie par un dessous de caisse et par le pare-chocs arrière (38) du véhicule à moteur (36).

6. Unité selon une quelconque des revendications précédentes, **caractérisée en ce que** le palier de pivotement (22) est maintenu par une pièce de base (32) portant le col de rotule (14).

7. Unité selon une quelconque des revendications précédentes, **caractérisée en ce que** l'axe de pivotement (30) est orienté obliquement par rapport à un plan longitudinal vertical (60) parallèle à la direction longitudinale (34) de véhicule.

8. Unité selon une quelconque des revendications précédentes, **caractérisée en ce que** la projection de l'axe de pivotement (30) sur un plan longitudinal vertical (60) parallèle à la direction longitudinale de véhicule (34) est inclinée, par rapport à l'horizontale (64), d'un angle (β) qui se situe dans une plage angulaire d'environ 0° à environ 60°.

9. Unité selon la revendication 8, **caractérisée en ce que** la plage angulaire va jusqu'à un maximum de 50°.

10. Unité selon la revendication 8 ou 9, **caractérisée en ce que** la plage angulaire commence à au moins 15°.

11. Unité selon une quelconque des revendications précédentes, **caractérisée en ce que** la projection de l'axe de pivotement (30) sur un plan horizontal (62) est orientée obliquement, par rapport à la direction longitudinale (34) de véhicule, d'un angle (α) qui se situe dans une plage angulaire d'environ 20° à environ 70°.

12. Unité selon la revendication 11, **caractérisée en ce que** la plage angulaire se situe entre environ 30° et environ 65°.

13. Unité selon une quelconque des revendications précédentes, **caractérisée en ce que** la projection de l'axe de pivotement (30) sur un plan transversal (66) vertical, orienté perpendiculairement à la direction longitudinale (34) de véhicule, est inclinée, par rapport à l'horizontale (68), d'un angle (γ) qui se situe dans une plage angulaire d'environ 0° à environ 60°.
